Europäisches Patentamt

European Patent Office

Office européen des brevets

(11) Veröffentlichungsnummer: **0 283 947**
**B1**

(12) **EUROPÄISCHE PATENTSCHRIFT**

(45) Veröffentlichungstag der Patentschrift:
06.06.90

(21) Anmeldenummer: 88104325.1

(22) Anmeldetag: 18.03.88

(51) Int. Cl.⁵: **B60T 13/74**, B61H 5/00,
B60T 17/08

(54) Elektromotorische Bremsbetätigungsvorrichtung für Schienenfahrzeuge.

(30) Priorität: 26.03.87 DE 3709952

(43) Veröffentlichungstag der Anmeldung:
28.09.88 Patentblatt 88/39

(45) Bekanntmachung des Hinweises auf die Patenterteilung:
06.06.90 Patentblatt 90/23

(84) Benannte Vertragsstaaten:
AT CH FR GB LI

(56) Entgegenhaltungen:
DE-B- 2 128 169
GB-A- 2 071 796

(73) Patentinhaber: Wilke, Richard, Dipl.-Ing., Am
Weissenfeld 4, D-5830 Schwelm(DE)
Patentinhaber: Korthaus, Helmut, Fernblick 3,
D-5600 Wuppertal 2(DE)

(72) Erfinder: Wilke, Richard, Dipl.-Ing., Am Weissenfeld 4,
D-5830 Schwelm(DE)
Erfinder: Korthaus, Helmut, Fernblick 3,
D-5600 Wuppertal 2(DE)

(74) Vertreter: Ostriga, Harald, Dipl.-Ing. et al, Patentanwälte
Dipl.-Ing. Harald Ostriga Dipl.-Ing. Bernd Sonnet
Stresemannstrasse 6-8, D-5600 Wuppertal 2(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine elektromotorische Bremsbetätigungsvorrichtung, insbesondere für Schienenfahrzeuge, wie sie entsprechend dem Oberbegriff des Patentanspruchs 1 durch die DE-A 3 010 335 bekanntgeworden ist.

Die bekannte Bremsbetätigungsvorrichtung zeichnet sich dadurch aus, daß während des Bremshubes, d.h. während sich der Federspeicher entspannt, der elektrische Aufzugsmotor über die elektrische Einspeisung mit einer regelbaren elektrischen Spannung derart beaufschlagt wird, daß der vom Federspeicher abgegebene und auf die Bremsbacken wirkende effektive Druck feinfühlig und einstellbar regelbar ist. Die Regelung der elektrischen Spannung für den Federspeichermotor erfolgte hierbei durch eine Wheatstone'sche Brückenanordnung, die bei Nullabgleich Stillsetzen des Motors und Einschalten der Haltebremse bewirkt.

Wie die praktische Erfahrung gezeigt hat, ist es bei dieser bekannten Bremsbetätigungsvorrichtung notwendig, das Bremsgerät, besehtend aus Motor und Federspeicher, auf einem Prüfstand zu eichen. Aus der sogenannten Federkennlinie ergibt sich der für jeden Bremshub zur Verfügung stehende Bremsdruck, der aus dem Gerät in das Bremszangensystem abgegeben werden kann.

Durch Vorgabe der regelbaren elektrischen Spannung auf die dem Federweg entsprechenden Werte mittels eines Zweiges der mit dem Federweg gekoppelten Wheatstone'schen Widerstandsbrücke erfolgt dann der Nullabgleich der Brücke. Dieser Nullabgleich bewirkt, daß der Bremsmotor abgeschaltet und die Haltebremse eingeschaltet werden, so daß der jetzt erzielte Bremsdruck in der gewünschten Höhe an der Bremse anliegt.

Bei dieser bekannten Bremsbetätigungsvorrichtung hat es sich als notwendig herausgestellt, jedes Bremsgerät vor seinem Einsatz auf einem Prüfstand auf einheitliche Werte einer gesamten Serie einzustellen. Hierbei ist eine gewisse Streubreite der einheitlich verlangten Werte nicht zu vermeiden. Andererseits können auch eine eventuelle unterschiedliche Alterung und Änderung der Federcharakteristiken in den einzelnen Geräten während der Betriebslebensdauer zu weiteren Streuwerten führen.

Von der DE-A 2 208 936 ist bereits ein Sollwert-Istwert-Abgleich unter Einbeziehung einer Wheatstone'schen Brücke im Zusammenhang mit einer Bremse anderer Gattung, und zwar einer hydraulischen Bremse, vorbekannt. Bei dieser bekannten Bremse werden die barometerähnliche Geberanordnung mit verschleißempfindlichem Gestänge sowie die innerhalb der Wheatstone'schen Brücke angeordneten mechanischen Schleifwiderstände als nachteilig empfunden, die während des Betriebs relativ häufig einer Nachjustierung bedürfen.

Schließlich sind von der GB-PS 13 52 869 elektrische Photowiderstände bekannt, die in Abhängigkeit vom Ausschlag eines den Erregerlichtstrom steuernden mechanischen Pendels einen Bremsvorgang am Anhänger eines Motorfahrzeuges auslösen.

Der Erfindung liegt die Aufgabe zugrunde, die Bremsbetätigungsvorrichtung der eingangs genannten, bekannten Art (DE-C2 3 010 335) so zu gestalten, daß selbst über lange Betriebszeiten eine feinfühlige Regelung der Bremskräfte ermöglicht ist und die Federwegcharakteristik des Federspeichers nicht mehr als Bezugsgröße für die über die Spannungsregelung zu erreichenden Bremskräfte dienen muß. Weiterhin sollen verschleiß- und störungsanfällige mechanisch veränderbare Widerstände vermieden werden.

Diese Aufgabe wird entsprechend dem Kennzeichenteil des Patentanspruchs 1 gelöst.

Es wird nun nicht mehr in dem einen Brückenzweig der Wheatstone'schen Brücke die Widerstandsänderung durch den zurückgelegten Weg des Federpaketes beeinflußt, sondern stattdessen tritt an diese Stelle ein sich verändernder Widerstand, der aus einem Dehnungsmeßstreifen gewonnen wird, der direkt in den vom Federspeicher abgegebenen Bremskraftfluß des Bremsgerätes integriert ist.

Der zweite variable Widerstand kann direkt in einem Druckmaßstab geeicht sein. Wenn der zweite variable Widerstand auf einen bestimmten Wert eingestellt ist, der einem bestimmten Druck entspricht, dann herrscht in dem Moment Brückengleichgewicht, in dem der Dehnungsmeßstreifen (erster variabler Widerstand) über das Bremsgerät den gleichen Widerstand erreicht, wie ihn der voreingestellte zweite variable Widerstand aufweist. In diesem Moment ist die Brücke abgeglichen und es wird dann der gleiche Schaltvorgang und Steuerungsvorgang eingeleitet wie bei der bereits bekannten Bremsbetätigungsvorrichtung (DE-C2 3 010 335). Die erfindungsgemäße Anordnung entspricht nun der Funktion eines Regelkreises.

Es ist verständlich, daß die Änderung des zweiten variablen Widerstandes auch eine Änderung des Bremsdruckes mit einem erneuten An- oder Abstieg des Widerstandswertes des Dehnungsmeßstreifens bewirkt und zwar bis zum wieder stattfindenden Brückenabgleich und Steuerung von Motor und Haltebremse zur Erhaltung dieses jetzt eingestellten Bremsdruckwertes.

Dehnungsmeßstreifen kann man nun in an sich bekannter Weise mit Temperaturschwankungen ausgleichenden zusätzlichen Widerständen beschalten, so daß die Dehnungsmeßstreifen weitgehend temperaturunempfindlich sind, also den jeweils erzeugten Druck in tatsächlicher Höhe repräsentieren.

Es ist somit gewährleistet, daß eine Ausrüstung des Bremsgerätes mit dem Dehnungsmeßstrei fen in der vorliegenden Form die bisher erforderliche Eichung aller Geräte einer Serie überflüssig macht. Die Federpakete brauchen nicht mehr in ihren Kennlinien genauestens aufeinander abgestimmt zu sein, sondern es genügt jetzt die Einhaltung der Herstellertoleranzen, die losweise durch einzelne Stückprüfungen der Einzelfedern überprüft werden kann. Neben dem nicht unwesentlichen Fortfall von Aufwendungen für die Einzelprüfung ergibt sich als weiterer Vorteil, daß die Wheatstone'sche Brückenanordnung nicht mehr mechanisch mit dem Gerät über Schleppzeiger verbunden sein muß. Dies ergibt eine vereinfachte Fertigung und eine preiswertere Herstellung des Bremsgerätes. Da zwischen dem Bremsgerät und dem an anderer Stelle des Drehgestelles anzubringenden Steuergerät als Wheatstone'sche Brücke regelmäßig keine großen Entfernungen vorhanden sind, genügt es, daß als Zuleitung zwischen Dehnungsmeßstreifen und dem Brückeneingang eine abgeschirmte Leitung verwendet wird.

Diese einfache Anordnung vermeidet die sonst übliche Verwendung eines Verstärkers hinter dem Dehnungsmeßstreifen, der die Widerstandsänderung des Dehnungsmeßstreifens als geregelte Spannung oder geregelten Strom weiterleitet. Es ist einleuchtend, daß durch den Fortfall dieses Verstärkers wieder Kosten eingespart und eine weitere mögliche Störungsquelle in dem Steuerungsverlauf vermieden werden.

In der Praxis hat es sich gezeigt, daß die in dem Bremsgestänge unvermeidlich vorhandene Elastizität und das Spiel in den Lagerzapfen als ziemlich konstante Verlustquelle bei der Vorgabe des Bremsdruckes berücksichtigt werden können, so daß diese einfache Anordnung eine immer entsprechend dem gewünschten Bremsdruck erforderliche Bremswirkung an den abzubremsenden Rädern sicherstellt.

Dadurch, daß der zweite variable Brückenwiderstand einen durch Infrarotlicht gesteuerten Feldeffekttransistor enthält, dessen Ausgangsklemmen einem Festwiderstand parallel geschaltet sind und dessen mit der Infrarotlichtquelle verbundene Eingangsklemmen als Bemskommando einen variablen vom Fahrschalter initiierten Strom erhalten, ist mit einfachen Mitteln eine einzige zentrale Anssteuerung aller jeweils einen Feldeffekttransistor und eine Infrarotlichtquelle aufweisenden Bremsbetätigungsvorrichtungen eines Fahrzeuges möglich.

Eine erhöhte Brückenabgleichempfindlichkeit und damit eine besonders feinfühlige Bedienungsweise der Bremsbetätigungsvorrichtung ist in weiterer Ausgestaltung der Erfindung dadurch gegeben, daß der Widerstandswert des Feldeffekttransistors um ein Vielfaches höher liegt als der des parallelgeschalteten Festwiderstandes und daß die Widerstandswerte dieses Festwiderstandes, der weiteren Festwiderstände der Wheatstone'schen Brücke sowie der unbelasteten Dehnungsmeßstreifen in der gleichen Größenordnung liegen.

In der Zeichnung sind bevorzugte Ausführungsbeispiele der Erfindung dargestellt; es zeigen,

Fig. 1 eine elektromotorische Bremsbetätigungsvorrichtung in mehr schematischer Darstellung,

Fig. 2 eine genauere Darstellung des zweiten variablen Widerstandes eines Brückenzweiges und

Fig. 3 eine von Fig. 1 abweichende Anbringung von Dehnungsmeßstreifen im Bereich des Schnittes III-III in Fig. 1.

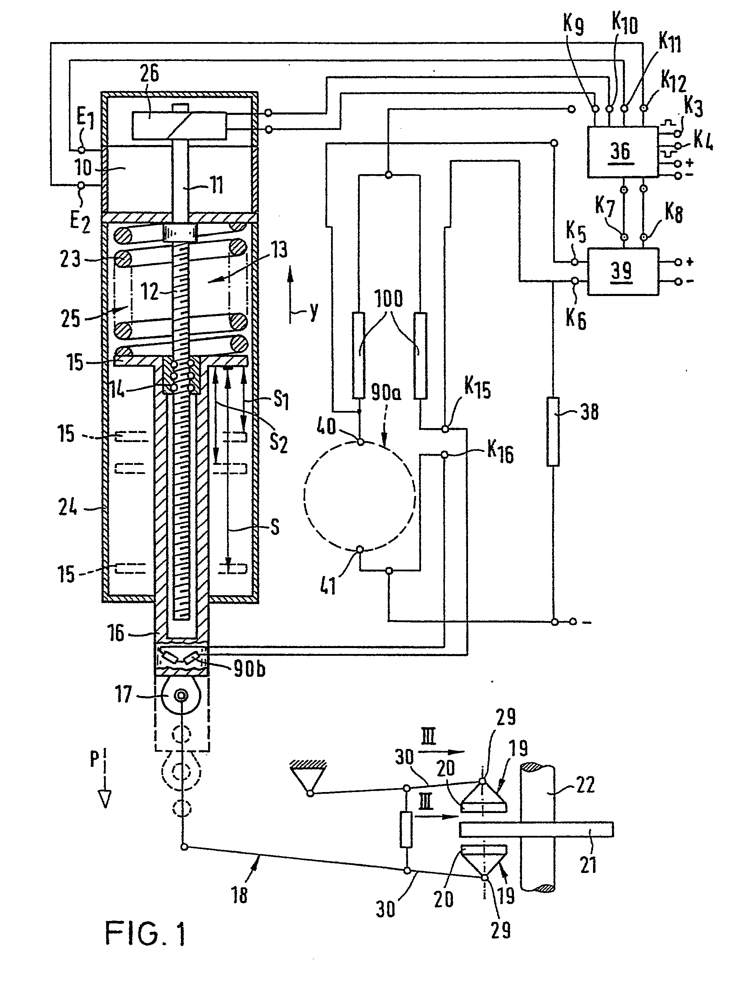

In Fig. 1 ist mit der Bezugsziffer 10 ein Elektromotor bezeichnet, z.B. ein Gleichstrom-Hauptschlußmotor von 24 Volt Betriebsspannung.

Der Elektromotor 10 wird hier als elektrischer Aufzugsmotor bezeichnet. Die Welle 11 des Motors 10 ist mit einer Gewindespindel 12 eines insgesamt mit 13 bezeichneten Gewindetriebs drehverbunden.

Die drehbare Gewindespindel 12 ist gegen Axialbewegung gesichert und trägt eine Kugelumlaufmutter 14, welche kraft- und formschlüssig in einem Federteller 15 untergebracht ist, der sich in einem Schubrohr 16 (besser: Schubzugrohr) fortsetzt, dessen endseitiges Auge 17 mit einem nur schematisch im Verhältnis verkleinert dargestellten Bremsgestänge 18 bewegungsverbunden ist, dessen Bremsbacken 19 Bremsbeläge 20 tragen. Die Bremsbacken 19 mit Bremsbelägen 20 wirken auf eine ebenfalls nur schematisch dargestellte Bremsscheibe 21 auf einer Achse 22.

Das Schubzugrohr 16 wird durch eine Speicherfeder 23 aus dem Gehäuse 24 nach außen gedrückt. Der elektrische Aufzugsmotor 10 hingegen wird über eine Einspeisung bei $E_1$ und $E_2$ mit elektrischer Leistung in Spannrichtung y des insgesamt mit 25 bezeichneten Federspeichers beaufschlagt und drückt hierbei die Speicherfeder 23 über den Gewindetrieb 13 zusammen und zieht dabei das Schubzugrohr 16 in das Gehäuse 24 zurück.

In Fig. 1 ist der gesamte Federweg des Federspeichers 25 mit S bezeichnet. Je nach Fortschritt der Abnutzung der Bremsbeläge 20 vollführt der Federspeicher 25 unterschiedliche Federwege. So ergibt sich bei im wesentlichen neuen Bremsbelägen 20 der Federweg $S_1$ und bei bereits teilweise abgenutzten Bremsbelägen 20 der Federweg $S_2$. Der gesamte Federweg S wird durchfahren, wenn die Bremsbeläge 20 im wesentlichen gänzlich verschlissen sind. Grundsätzlich ist es auch möglich, beim Lüften der Bremsbacken 19 nicht den gesamten Spannhub sondern jeweils nur einen konstanten Teilspannhub des Federspeichers 25 zu durchfahren.

In jedem Falle sind die Bremsbeläge 20 von der Bremsscheibe 21 gelöst, wenn sich der Federteller 15 nicht in der gestrichelten sondern vielmehr in der voll durchgezogen gezeichneten Position befindet.

In der durchgezogen dargestellten Stellung des Schubzugrohres 16 ist der Elektromotor 10 abgeschaltet, während die Elektromagnetbremse 26 (Haltebremse) eingeschaltet ist. Die Elektromagnetbremse 26 erhält ihre elektrische Leistung über die Klemmen $K_9$ und $K_{10}$. Die Bremsbacken 19 sind daher gelöst, das nicht dargestellte Fahrzeug fährt. Zur Einleitung des Bremshubes erhält das Schaltgehäuse 36 über die Klemme $K_3$ einen elektrischen Bremsimpuls, welcher die Elektromagnetbremse 26 lüftet.

Die Speicherfeder 23 drückt daraufhin den Federteller 15 auswärts, weil der Kugelgewindetrieb 13 samt Rotor des Elektromotors 10 nicht mehr an einer Drehung gehindert ist und in Folge des hohen Wirkungsgrades des Kugelgewindetriebs 13 den Weg des Federtellers 15 und des Schubzugrohres 16 nach außen nicht behindert.

Sollen die Bremsbacken 19 von der Bremsscheibe 21 gelöst werden, erhält das Schaltgehäuse 36 über die Klemme K₄ den Impuls "Lüften", wodurch der elektrische Aufzugsmotor 10 seine volle Betriebsspannung von beispielsweise 24 Volt erhält und den Federteller 15 wieder in seine Ausgangslage, nämlich in die voll durchgezogen gezeichnete Position, fährt.

Die Ausgangslage kann in irgendeiner Weise, z.B. mittels eines die Ausgangslage bestimmenden Mikroschalters definiert werden.

Zur Regelung der allgemein mit P bezeichneten Bremskraft ist folgendes vorgesehen:

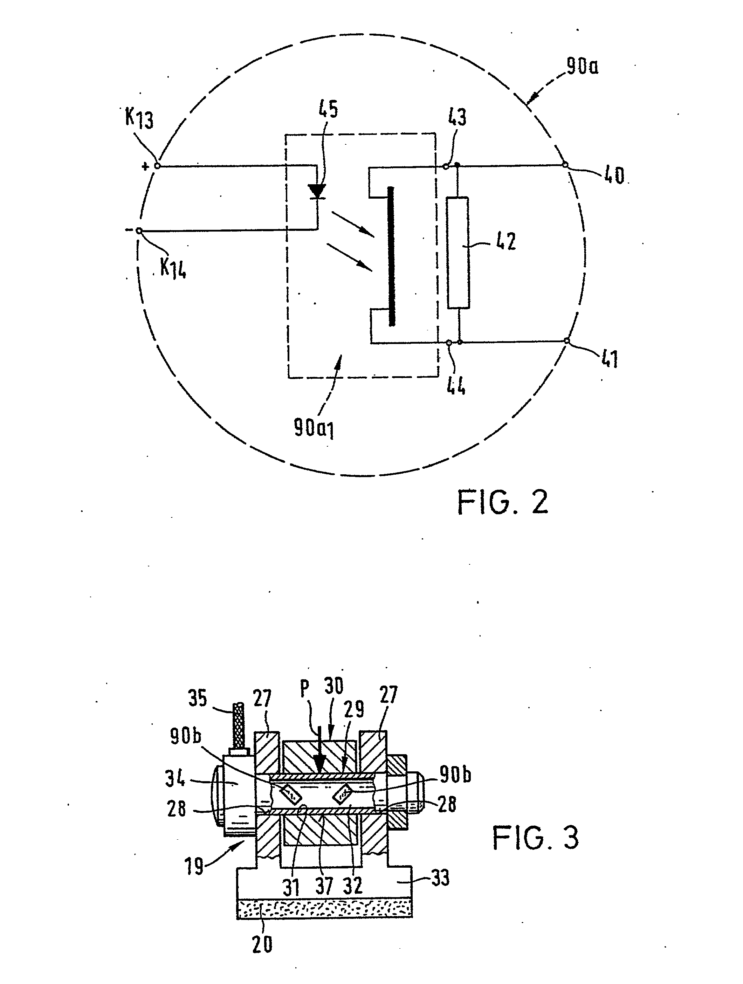

Zwei Festwiderstände 100, ein in den Fig. 1 und 2 jeweils mit einer gestrichelten Einkreisung gekennzeichneter und insgesamt mit 90a bezeichneter variabler Widerstand sowie zwei hintereinandergeschaltete, insgesamt mit 90b bezeichnete Dehnungsmeßstreifen sind als Wheatstone'sche Brücke geschaltet. Die Dehnungsmeßstreifen 90b bilden hierbei als Brückenzweig Bestandteil einer Wheatstone'schen Viertelbrücke. Statt der beiden Dehnungsmeßstreifen 90b kann auch ein einziger Dehnungsmeßstreifen 90b vorhanden sein. Mehrere Dehnungsmeßstreifen 90b sind indes vorteilhaft, weil sie der Verstärkung der Widerstandsänderung dienen.

Der variable Widerstand 90a kann direkt in einem Druckmaßstab geeicht sein. Wenn also der variable Widerstand 90a auf einen bestimmten Wert eingestellt ist, der einem bestimmten Druck P entspricht, dann herrscht in dem Moment Brückengleichgewicht, in dem die Dehnungsmeßstreifen-Anordnung 90b über die Betätigung des Bremsgerätes, d.h. über den in den Bauteilen 16, 17 vorhandenen Druck P, den gleichen Widerstand erreicht, wie ihn der voreingestellte variable Widerstand 90a aufweist. In diesem Moment ist die Wheatstone'sche Brücke 100, 100, 90a, 90b abgeglichen. Hierbei ist der gewissermaßen einen Sollwertgeber darstellende variable Widerstand 90a gleich dem Widerstand der Dehnungsmeßstreifenanordnung 90b, bzw. der über 90a eingestellte bzw. vorgewählte Bremsdruck P ist gleich dem direkt über die Dehnungsmeßstreifenanordnung 90b ermittelten Bremsdruck P.

Für den Fall jedoch daß während des Bremsvorganges die Bremskraft geändert, d.h. verstärkt oder vermindert werden soll, wird der variable Widerstand 90a betätigt. Dies geschieht in Abhängigkeit vom Fahrschalter mit der Folge, daß die Wheatstone'sche Brücke nicht mehr abgeglichen ist. Daraufhin wird gemäß Fig. 1 die Brückenspannung über einen hochohmigen Widerstand 38 an die Klemmen K₅, K₆ eines Verstärkers 39 bekannter Bauart gelegt. Der Widerstand 38 dient als Brücken-Abgleichwiderstand.

Von den Ausgangsklemmen K₇, K₈ des Verstärkers 39 wird nunmehr der Aufzugsmotor 10 über das Schaltgehäuse 36 an eine entsprechend der zwischen K₇ und K₈ vorhandenen Spannung proportionale Gleichspannung gelegt, was über die Ausgangsklemmen K₁₁, K₁₂ erfolgt, die mit den motorseitigen Eingangsklemmen E₁, E₂ verbunden sind. Für den Fall also, daß die auf die Dehnungsmeßstreifenanordnung 90b wirkende Kraft P im Vergleich zu 90a zu groß ist, entwickelt der Aufzugsmotor 10 eine der Kraft des Federspeichers 25 entgegenwirkende Kraft. Dieses geschieht so lange, bis wieder Abgleich in der Brücke 100, 100, 90a, 90b erzielt ist, wobei bei Nichtvorhandensein der Regelspannung an K₇, K₈ das Schaltgehäuse 36 die Elektromagnetbremse 26 über die Klemmen K₉ und K₁₀ aktiviert. Für den Fall aber, daß die Bremskraft P gegenüber dem mit 90a vorgewählten Wert zu gering sein sollte, verläuft der Regelungsvorgang analog in umgekehrter Weise: Die Elektromagnetbremse 26 wird gelöst und der Elektromotor 10 entwickelt entsprechend der zwischen K₇ und K₈ anstehenden Regelspannung ein Drehmoment, das sich über den Kugelgewindetrieb 13 als eine dem Federspeicher 25 in geringerer Höhe entgegenwirkende Kraft darstellt. Hierdurch wird der Bremsdruck P so lange erhöht, bis der über die Dehnungsmeßstreifenanordnung 90b geänderte Widerstandswert einen Brückenabgleich bewirkt, bei welchem die Elektromagnetbremse 26 (Halterbremse) eingeschaltet und der Aufzugsmotor 10 abgeschaltet oder aber die durch den Aufzugsmotor 10 hervorgerufene, dem Federspeicher 25 entgegenwirkende Kraft die über 90a eingestellte Bremskraft P aufrechterhält.

In Fig. 2 ist der zweite variable Widerstand 90a näher dargestellt:

Die Klemmen, mit welchen der variable Widerstand 90a in die Wheatstone'sche Brücke eingegliedert ist, sind gemäß den Fig. 1 und 2 jeweils mit 40, 41 bezeichnet. Parallel zu 40, 41 liegt gemäß Fig. 2 ein Festwiderstand 42, welcher widerum parallel zu einem insgesamt mit 90a₁ bezeichneten Foto-Feldeffekttransistor 90a₁ liegt. Der Foto-Feldeffekttransistor 90a₁ wird über die Klemmen K₁₃, K₁₄ mittels eines variablen Regelstroms aktiviert. Derartige Foto-Feldeffekttransistoren werden von der US-Firma GENERAL ELECTRIC als "Photon Coupled Bilateral Analog FET" mit den Einzeltyp- Bezeichnungen "H11 F1", "H11 F2" und "H11 F3" vertrieben. Ein solcher auf Infrarotlicht empfindlicher Feldeffekttransistor 90a₁ ändert seinen Widerstand zwischen den Klemmen 43, 44 linear bzw. stetig mit dem in die Infrarot-Lichtquelle 45 über K₁₃ und K₁₄ eingespeisten Regelstrom.

Der zwischen den Klemmen 43 und 44 durch die Strahlungsintensität die Infrarot-Lichtquelle 45 sich ändernde Widerstand des Feldeffekttransistors 90a₁ ist größenordnungsmäßig beispielsweise um Zehnerpotenzen größer als der Widerstand der Dehnungsmeßstreifenanordnung 90b. So könnten beispielsweise die Festwiderstände 100, 100 sowie 42 sowie die momentan durch keinen Druck P belastete Dehnungsmeßstreifenanordnung 90b jeweils einen Wert von 700 Ohm aufweisen, während der Widerstand des Feldeffekttransistors Werte im Bereich von etwa 70.000 Ohm annehmen könnte. Die Parallelschaltung des Festwiderstandes 42 zum Feldeffekttransistors 90a₁ hat daher den Vorteil, daß der gesamte Widerstand des Brückenzweiges 90a sehr feinfühlig, im vorliegenden Falle etwa im Bereich von 700 Ohm, verändert werden kann, was eine erhöhte Brückenabgleichempfindlichkeit bei Änderung des Widerstandswertes der Dehnungsmeßstreifenanordnung 90b ergibt. Die Regelempfindlichkeit des insgesamt mit 90a bezeichneten Brückenzweiges entspricht daher der geringen Widerstandsänderung der Dehnungsmeßstreifenanordnung 90b, welche wiederum als Brückenzweig in der Wheatstone'schen Brücke den Brückenabgleich als Kommando (verursacht durch die Änderung des Bremsdruckes P) für das Bremsgerät initiiert.

Es bleibt noch zu erwähnen, daß die mit $K_{13}$ und $K_{14}$ bezeichneten Klemmen zur Beeinflussung der Infrarot-Lichtquelle 45 des Foto-Feldeffekttransistors $90a_1$ mit Konstant- Spannung gespeist werden, so daß der Speisestrom (Regelstrom) für den Feldeffekttransistor $90a_1$ im linearen Zusammenhang mit der Widerstandsänderung ist. Die Änderung des Speisestroms (Regelstrom) ist hierbei ein Maß für die Stellung des Fahrschalters bzw. ersetzt letzteren.

Wenn also unter Bezugnahme auf die Fig. 1 und 2 und auf die vorher beispielsweise erwähnten Widerstandswerte der Gesamtwiderstand von 90a auf 701 Ohm erhöht würde, der derzeitige aktuelle Widerstand des Dehnungsmeßstreifens 90b aber nur 700 Ohm betrüge, so würde durch die bereits oben erwähnte Nachstellung mittels des Elektroaufzugsmotors 10 der Bremsdruck P, der die Dehnungsmeß streifenanordnung 90b beeinflußt, so geändert werden, daß per Saldo der Widerstand des Dehnungsmeßstreifens 90b ebenfalls auf 701 Ohm anwachsen würde, also die aus 100, 100, 90a und 90b gebildete Wheatstone'sche Brücke abgeglichen wäre.

Beim Ausführungsbeispiel gemäß Fig. 3 ist eine besondere räumliche Zuordnung der Dehnungsmeßstreifenanordnung 90b dargestellt:

Aus Fig. 3 wird deutlich, daß die Bremsbacke 19 eine Trägerplatte (Bremsträger) 33 und zwei konsolartige Stege 27 aufweist. Ein Hohlzapfen 29 durchsetzt beide konsolartigen Stege 27 in Aufnahmeöffnungen 28 sowie das zwischen den Stegen 27 aufgenommene freie Ende einer Bremszangenhälfte 30 in einer Aufnahmeöffnung 31.

Der Hohlzapfen 29 trägt an seiner Innenmantelfläche 32 zwei oder mehrere aufgeklebte Dehnungsmeßstreifen 90b.

Die elektrische Zuleitung für die Dehnungsmeßstreifen 90b wird durch den Hohlbolzenkopf 34 über einen Kabelanschluß 35 zu den aus Fig. 1 ersichtlichen Klemmen $K_{15}$, $K_{16}$ geführt.

Grundsätzlich sind dem Hohlzapfen 29 vergleichbare Zapfen mit innenliegenden Dehnungsmeßstreifen durch Produkte der Firma VIBRO-METER GmbH vorbekannt.

Die Funktion des in Fig. 3 insgesamt mit 38 bezeichneten Anordnung ist folgende:

Bei der Anordnung gemäß Fig. 1 könnte beiden Bremsbacken 19 je ein mit Dehnungsmeßstreifen 90b versehener Hohlzapfen 29 zugeordnet sein. Es kann aber auch genügen, nur einer einzigen Bremsbacke 19 einen zwei Dehnungsmeßstreifen 90b beinhaltenden Hohlzapfen 29 zuzuordnen.

Die beim Bremsvorgang vom Federspeicher 25 über das Auge 17 auf die Bremsbacke 19 übertragene Kraft stellt sich wiederum als die Kraft P dar, welche einseitig von der Aufnahmeöffnung 31 der Bremszangenhälfte 30 auf den anliegenden Außenmantelbereich 37 des Hohlzapfens 29 übertragen wird.

Der beidendig in den Aufnahmeöffnungen 28 der Stege 27 gelagerte Hohlzapfen 29 biegt sich hierbei je nach Bremsbelastung mehr oder weniger elastisch durch. Diese elastische Verformung ruft zugleich eine Dehnung bzw. Stauchung der Dehnungsmeßstreifen 90b hervor, woraus wiederum eine die Wheatstone'sche Brücke beeinflussende Widerstandsänderung (wie oben zuvor beschrieben) resultiert. Die Widerstandsänderung des Dehnungsmeßstreifens 90b ist hierbei direkt proportional der Kraft P.

Die Ausführungsform gemäß Fig. 3 wird zweckmäßig dann gewählt, wenn innerhalb des Bremsgestänges 18 unkontrollierbare Verluste auftreten, die aber gemäß Fig. 3 dadurch ausgeschlossen werden, daß die Dehnungsmeßstreifen 90b direkt im Hohlzapfen 29 angebracht sind, der die Bremsbacken 19 als letztes Glied bewegt. Durch diese Anordnung nach Fig. 3 wird nunmehr der wirklich vorhandene Bremsdruck P an den Bremsbacken 19 erfaßt, so daß auch die Wirkungsgradverschlechterung durch das Bremsgestänge 18 eliminiert ist.

Vermerkt sei noch, daß es nicht unbedingt notwendig ist, temperaturausgleichende Mittel in die Dehnungsmeßstreifenanordnung 90b einzubringen, wenn man dafür sorgt, daß die Temperaturabhängigkeit ausgeglichen wird durch entsprechende temperaturabhängige Ausgestaltung des zweiten variablen Brückenwiderstandes (Geberwiderstandes) 90a. Dies kann insbesondere bei der Anordnung nach Fig. 3 von Interesse sein, weil an dieser Stelle durch die entstehende Reibungswärme an den Bremsbelägen 20 größere Temperatureinwirkungen möglich sind.

## Patentansprüche

1. Elektromotorische Bremsbetätigungsvorrichtung für eine einen Federspeicher (25), ein Bremsgestänge sowie Bremsbacken aufweisende Bremsmechanik, insbesondere für Schienenfahrzeuge, mit einem regelbaren Elektro-Aufzugsmotor (10) für den bei offener Bremse gespannten und sich beim Bremshub entspannenden Federspeicher, wobei die von einem Federspeicher-Schubrohr (16) über ein Schubrohr-Auge (17) abgegebene Federspeicher-Kraft die Bremsbacken im Schließsinne der Bremse mittelbar über das Bremsgestänge (18) beaufschlagt und wobei eine den Elektromotor in Federspeicher-Spannrichtung beaufschlagende, zwischen einem Mindest- und einem Höchstwert regelbare elektrische Einspeisung ($E_1$, $E_2$) vorgesehen ist, welche sowohl beim Spannen des Federspeichers eingeschaltet ist als auch während des Bremshubes in Abhängigkeit von einem elektrischen Brems-Signal (45) eines von der Bremsmechanik betätigten Signalgebers wirkt, welcher aus einer mindestens zwei variable Widerstände (90a, 90b) aufweisenden Wheatstone'schen Brücke besteht, dadurch gekennzeichnet, daß mindestens ein in dem vom Federspeicher (25) ausgehenden Bremskraftfluß angeordneter, insbesondere zwischen dem Schubrohr (16) des Federspeichers (25) und dem Schubrohr-Auge (17) angebrachter Dehnungsmeßstreifen (90b) als Brückenzweig den Wheatstone'schen Brücke (100, 100, 90a, 90b) einen ersten variablen Brückenwiderstand bildet, während der zweite variable Brückenwiderstand (90a) als weiterer Brückenzweig der Wheatstone'schen Brücke (100, 100, 90a, 90b) in Abhängigkeit von einem Bremskommando (bei $K_{13}$, $K_{14}$) veränderbar ist und einen durch Infrarotlicht gesteuerten Feldeffekttransistor (90a$_1$) enthält, dessen Ausgangsklemmen (43, 44) einem Festwiderstand (42) parallelgeschaltet sind und dessen mit der Infrarotlichtquelle verbundene Eingangsklemmen ($K_{13}$, $K_{14}$) als Bremskommando einen variablen Strom erhalten.

2. Elektromotorische Bremsbetätigungsvorrichtung nach Anspruch 1, dadurch gekennzeichnet, daß der Widerstandswert des Feldeffekttransistors (90a$_1$) um ein Vielfaches höher liegt als der des parallelgeschalteten Festwiderstandes (42) und daß die Widerstandswerte dieses Festwiderstandes (42), der weiteren Festwiderstände (100, 100) der Wheatstone'schen Brücke sowie der unbelasteten Dehnungsmeßstreifen (90b) in der gleichen Größenordnung liegen.

## Claims

1. Electromotive brake application apparatus for a brake mechanism with an energy-storing spring device (25), a brake linkage and brake clips, in particular for rail vehicles, having a controllable electric lift motor (10) for the energy-storing spring device which is tensioned when the brake is open and is relaxed during the braking stroke, the force of the energy-storing spring device, which is delivered by the spring device's push rod (16) by way of a push rod eye (17), acting upon the brake clips in the closing direction of the brake directly by way of the brake linkage (18) and an electrical power supply ($E_1$, $E_2$) being provided which acts on the electric motor in the tensioning direction of the energy-storing spring device, is adjustable between a minimum and a maximum value and is connected both during tensioning of the energy-storing spring device and during the brake stroke in dependence upon an electrical braking signal (45) of a signal transmitter which is actuated by the brake mechanism and comprises a Wheatstone bridge having at least two variable resistors (90a, 90b), characterised in that at least one wire strain gauge (90b) disposed in the braking force flow originating from the energy-storing spring device (25), in particular mounted between the push rod (16) of the energy-storing spring device (25) and the push rod eye (17), forms as a bridge branch of the Wheatstone bridge (100, 100, 90a, 90b) a first variable bridge resistor while the second variable bridge resistor (90a) as a further bridge branch of the Wheatstone bridge (100, 100, 90a, 90b) is variable in dependence upon a braking command (at $K_{13}$, $K_{14}$) and includes an infrared-light controlled field effect transistor (90a$_1$) whose output terminals (43, 44) are connected in parallel to a fixed resistor (42) and whose input terminals ($K_{13}$, $K_{14}$) connected to the infrared light source receive a variable current as a braking command.

2. Electromotive brake application apparatus according to claim 1, characterised in that the resistance value of the field effect transistor (90a$_1$) is several times higher than that of the paralleled fixed resistor (42), and that the resistance values of this fixed resistor (42), of the further fixed resistors (100, 100) of the Wheatstone bridge and of the unloaded wire strain gauges (90b) are in the same order of magnitude.

## Revendications

1. Dispositif à moteur électrique de manœuvre de frein pour un mécanisme de freinage présentant un accumulateur (25) à ressort, une tringlerie de frein ainsi que des mâchoires de frein, en particulier pour véhicules sur rails, avec un moteur électrique (10) réglable de remontage pour l'accumulateur à ressort qui est en tension lorsque le frein est ouvert, et se détend lors de la course du mouvement de freinage, tandis que la force de l'accumulateur à ressort délivrée par un tube (16) de poussée d'accumulateur à ressort par l'intermédiaire d'un œilleton (19) du tube de poussée agit indirectement sur les mâchoires de frein dans le sens de la fermeture du frein par l'intermédiaire de la tringlerie (18) de frein, et tandis qu'une alimentation électrique ($E_1$, $E_2$) réglabe entre une valeur minimale et une valeur maximale est prévue pour agir sur le moteur électrique dans le sens de la mise en tension de l'accumulateur à ressort et est aussi bien commutée en service pendant la mise en tension de l'accumulateur à ressort qu'elle agit pendant la course du mouvement de freinage en fonction d'un signal (45) de freinage électrique émis par un générateur de signaux qui, actionné par le mécanisme de freinage, se compose d'un pont de Weatstone présentant au moins deux résistances variables (90a, 90b), caractérisé par le fait qu'au moins une jauge extensométrique (90b) de contrainte, placée dans le flux de la force de freinage émanant de l'accumulateur (25) à ressort, en particulier entre le tube (16) de poussée de l'accumulateur (25) à ressort et l'œilleton (17) du tube de poussée, forme en tant que l'une des branches du pont de Weatstone (100, 100, 90a, 90b) une première résistance variable du pont, tandis que la seconde résistance variable (90b) du pont peut être variée en tant que branche supplémentaire du pont de Weatstone (110, 100, 90a, 90b) en fonction d'une instruction de freinage (sur $K_{13}$, $K_{14}$) et contient un transistor (90a$_1$) à effet de champ qui est asservi par de la lumière infrarouge et dont les bornes de sortie (43, 44) sont montées en parallèle par rapport à une résistance (42) fixe et dont les bornes d'entrée ($K_{13}$, $K_{14}$), reliées à la source de lumière infrarouge, reçoivent à titre d'instruction de freinage un courant variable.

2. Dispositif à moteur électrique de manœuvre de frein suivant la revendication 1, caractérisé par le fait que la valeur de la résistance du transistor (90a$_1$) à effet de champ est une multiple de la résistance (42) fixe montée en parallèle, et que les valeurs de résistance de ladite résistance (42) fixe, des autres résistances fixes (100, 100) du pont de Weatstone, ainsi que des jauges extensométriques (90b) de contrainte hors charge, évoluent dans un même ordre de grandeur.

FIG. 1

FIG. 2

FIG. 3